# EUROPEAN PATENT SPECIFICATION

(11) **EP 1 060 216 B1**
(45) Date of publication and mention of the grant of the patent: **22.01.2003**
(21) Application number: 99909837.9
(22) Date of filing: 05.03.1999
(51) Int. Cl.: C08L 77/02, C08K 7/02, C08K 7/14, C08K 13/04

(54) **POLYAMIDE COMPOSITIONS FOR FRICTION-WELDABLE MOLDED ARTICLES**
POLYAMIDZUSAMMENSETZUNGEN FÜR REIBUNGSSCHWEISSBARE FORMKÖRPER
COMPOSITIONS DE POLYAMIDE POUR ARTICLES MOULES SOUDABLES PAR FRICTION

(30) Priority: 06.03.1998 JP 7123798
(43) Date of publication of application: 20.12.2000
(73) Proprietor: E.I. DU PONT DE NEMOURS AND COMPANY, Wilmington Delaware 19898 (US)
(72) Inventor: NOZAKI, Masahiro, Utsunomiya-shi, Tochigi-ken 321-0932 (JP)
(74) Representative: Jones, Alan John
(86) International application number: US9904816
(87) International publication number: WO99045071

(56) References cited:
- WO-A-97/10303
- US-A- 5 206 309
- PATENT ABSTRACTS OF JAPAN vol. 097, no. 005, 30 May 1997 & JP 09 012877 A (UBE IND LTD), 14 January 1997 cited in the application
- PATENT ABSTRACTS OF JAPAN vol. 097, no. 007, 31 July 1997 & JP 09 057790 A (UBE IND LTD), 4 March 1997
- PATENT ABSTRACTS OF JAPAN vol. 096, no. 010, 31 October 1996 & JP 08 151517 A (UBE IND LTD), 11 June 1996 cited in the application

## Description

The present invention relates to improved polyamide resin compositions exhibiting enhanced flow, making them attractive for friction welding applications. More particularly, the compositions of the invention are useful in fabricating articles requiring excellent burst strength, including large molded articles, molded articles of complex shape, and hollow molded articles.

### Background of the Invention

Vibration welding, which is a type of friction welding, is employed in the production of hollow molded articles such as air intake manifolds. Polyamide 6 has an excellent weldability, and so compositions of polyamide 6 and inorganic fillers have often been used as friction-welding materials. Moreover, because of the outstanding heat resistance required of molded articles such as air intake manifolds, a number of friction-welded materials with improved heat resistance have been developed, including polyamide compositions comprising polyamide 66 resin in combination with aliphatic polyamide resins other than polyamide 66 resin (JPA 8-151517 (1996)), and compositions of polyamide copolymers having a polyamide 6 component and a polyamide 66 component in combination with inorganic fillers (JPA 9-12877 (1997)).

However, depending on the size and shape of the molded article, such polyamide compositions may have insufficient flow and be unable to provide satisfactory molded articles unless shaping is carried out under very limited conditions. For instance, when molding a large article, the use of the above polyamide compositions necessitates a high injection pressure which leads to problems such as burn marks on the surface of the molded article and the formation of flash. Moreover, depending on the application, the friction-welded molded articles formed from these compositions sometimes lack sufficient bursting strength.

One well-known approach for improving the flow of the polyamide composition is to use a low molecular weight polyamide. However, lowering the molecular weight reduces the friction-welding strength, and so this is not a flow-enhancing technique suitable for use in polyamide compositions for friction-welded molded articles.

Surprising, it has been found that polyamide compositions having both good resin flow and which are capable of producing friction-welded molded articles with excellent bursting strength can be achieved. Such compositions find particular application in the manufacture of air intake manifolds.

### Summary of the Invention

There is disclosed and claimed herein a polyamide composition for friction-weldable molded articles comprising:
(A) 100 parts by weight of a polyamide mixture of (a) polyamide 6 and (b) an aliphatic polyamide copolymer and/or an aliphatic polyamide terpolymer, wherein the weight ratio of (a) to (b) is from 95:5 to 50:50; and
(B) 10 to 100 parts by weight of an inorganic reinforcement, based on the weight of the polyamide mixture.

According to another aspect of the present invention, the aliphatic polyamide copolymer in the polyamide composition described above is a polyamide 66/6 copolymer, and the aliphatic polyamide terpolymer is a polyamide 6/66/610 terpolymer, a polyamide 6/66/612 terpolymer, or a mixture thereof.

According to yet another aspect of the invention, either of the above polyamide compositions additionally comprises from 0.1 to 6 parts by weight of a plasticizer, based on the weight of the polyamide mixture and the inorganic reinforcement.

A still further aspect of the invention provides a polyamide molded article comprising at least two members which have been friction-welded using any of the foregoing polyamide compositions.

### Description of the Invention

The polyamide compositions of the present invention are especially suitable as friction-welded molded articles, and may be employed in any known friction-welding method, such as vibration welding, ultrasonic welding, or spin welding.

Polyamide (a) used in the present invention is polyamide 6, which can be obtained by the ring-opening polymerization of ε-caprolactam.

The other polyamide (b) used in the invention is an aliphatic polyamide copolymer, an aliphatic polyamide terpolymer, or a mixture of an aliphatic polyamide copolymer and an aliphatic polyamide terpolymer. The aliphatic polyamide copolymer and aliphatic polyamide terpolymer must contain as a polymer component the monomers of polyamide 66 or polyamide 6. Without intending to limit the generality of the foregoing, illustrative examples of such copolymers include polyamide 66/6 copolymers, polyamide 66/68 copolymers, polyamide 66/610 copolymers, polyamide 66/612 copolymers, poiyamide 66/10 copolymers, polyamide 66/12 copolymers, polyamide 6/68 copolymers, polyamide 6/610 copolymers, polyamide 6/612 copolymers, polyamide 6/10 copolymers, and polyamide 6/12 copolymers. Similarly, illustrative examples of such terpolymers include polyamide 6/66/610 terpolymers, polyamide 6/66/69 terpolymers, polyamide 6/66/11 terpolymers, polyamide 6/66/12 terpolymers, polyamide 6/610/11 terpolymers, polyamide 6/610/12 terpolymers, and polyamide 6/66/PACM (bis-p-(aminocyclohexyl)methane)terpolymers. Of these, polyamide 66/6 copolymers, polyamide 6/66/610 terpolymers, polyamide 6/66/612 terpolymers, and mixtures of two or more of these polymers are preferred. Especially preferred are polyamide 66/6 copolymers in which the molar ratio of polyamide 66 units to polyamide 6 units ranges from 98:2 to 2:98; polyamide 6/66/610 terpolymers in which the ratio of the moles of polyamide 6 units and polyamide 66 units combined to the moles of polyamide 610 units is from 98:2 to 25:75, and the molar ratio of polyamide 6 units to polyamide 66 units is from 2:98 to 98:2; and polyamide 6/66/612 terpolymers in which the ratio of the moles of polyamide 6 units and polyamide 66 units combined to the moles of polyamide 612 units is from 98:2 to 25:75, and the molar ratio of polyamide 6 units to polyamide 66 units is from 2:98 to 98:2.

The above-described polyamide (a) and polyamide (b) are used in a ratio by weight of from 95:5 to 50:50, preferably from 90:10 to 50:50, and more preferably from 75:25 to 50:50. At a polyamide (a) proportion greater than 95, the bursting strength of the molded article is insufficient, whereas at less than 25, the weldability is inadequate.

The inorganic reinforcement in the invention may be any known inorganic reinforcement that can be used in polyamides. Examples of suitable inorganic reinforcements include glass fibers, carbon fibers, potassium titanate whiskers, kaolin, talc, and mica. Of these, glass fibers are preferred. The inorganic reinforcement is compounded in an amount, per 100 parts by weight of the mixture of polyamides (a) and (b), of 10 to 100 parts by weight, preferably 20 to 85 parts by weight, and more preferably 30 to 75 parts by weight. At less than 10 parts by weight, the mechanical strength is not sufficiently enhanced, whereas the use of more than 100 parts by weight adversely affects resin flow.

The plasticizer used in the present invention is selected from the group consisting of low molecular weight poly (ethylene glycol) esters of the formula

R-COO-(CH₂CH₂O)ₙ-OC-R

wherein R is a straight-chain or branched alkyl having 1 to 40 carbons, and n is from 2 to 20; and long-chain alkyl polyesters of the formula

HOOC-R-CO-(O-R'-O-CO-R-CO)ₙ-O-R'-OH

wherein R is an alkyl having 16 to 45 carbons and R' is an alkyl having 2 to 6 carbons or R is an alkyl having 2 to 6 carbons and R' is an alkyl having 16 to 45 carbons, and n is from 2 to 50.

Preferred plasticizers in the invention are 2-ethyl hexanoic acid-terminated (n = 9) low molecular weight poly (ethylene glycol) esters and long-chain alkyl polyesters. A polyester formed from the reaction of a dicarboxylic acid having 36 carbons with glycol is especially preferred.

The amount of plasticizer included in the composition, per 100 parts by weight of the polyamide mixture and the inorganic reinforcement combined or, when polyamide 6 is used alone as the polyamide in the composition, per 100 parts by weight of the polyamide 6 and the inorganic reinforcement combined, is from 0.1 to 6 parts by weight, preferably from 0.2 to 4 parts by weight, and most preferably from 0.4 to 3 parts by weight. At less than 0.1 part by weight, the flow and weldability are insufficient, whereas at more than 6 parts by weight, exudation of the plasticizer to the surface of the molded article occurs, resulting in contamination of the mold.

In addition to the components described above, the inventive compositions may include also such additives as flame retardants, impact modifiers, heat stabilizers, antioxidants, nucleating agents, dyes, pigments, and parting agents, insofar as the properties of the compositions are not compromised.

The polyamide compositions of the invention may be prepared by any suitable method known to those skilled in the art. Illustrative examples include a method in which all of the components are mixed together, following which the resulting mixture is worked and extruded in a twin-screw extruder or some other melting and working apparatus, then pelletized; a method wherein polyamide 6, or a mixture of polyamide 6 with an aliphatic polyamide copolymer or an aliphatic polyamide terpolymer, is worked in a twin-screw extruder or some other melting and working apparatus, the other components are added to the resulting molten polyamide, followed by melting and working, then molding; and a method in which polyamide 6 and an aliphatic polyamide copolymer or an aliphatic polyamide terpolymer are mixed, the resulting mixture is worked and extruded using a twin-screw extruder or some other melting and working apparatus, and subsequently pelletized, following which the resulting pellets and the other components are melted and worked, then molded in an injection molding machine.

The polyamide compositions according to the present invention are used in the friction welding of polyamide molded articles comprising at least two members. Each of the members may be made of a composition containing the same polyamide mixture as that within the polyamide composition used in friction welding, may be made of a composition containing a polyamide mixture of the same types of polyamides but in a different proportion, or may be made of a composition containing a different polyamide mixture.

### Examples

Examples are given below to illustrate the present invention, although these examples in no way limit the invention.

### Examples 1 to 5, Comparative Examples 1 to 3

The ingredients shown in Tables 1 and 2 were melted and worked together in a twin-screw extruder (Model No. ZSK-40, manufactured by Werner & Pfleiderer), extruded and water-cooled, following which the extrudate was palletized.

Using the resulting pellets, the relative viscosity of the composition was measured in 90% formic acid. In addition, the flow properties were measured by using a spiral flow mold (thickness, 0.8 mm; width, 2 cm) to carry out a flow test at a resin temperature of 260°C, a mold temperature of 70°C, and an injection pressure of 1,800 kg/cm².

Next, molded test pieces (hemispherical moldings having a diameter of about 180 mm) were fabricated from the resulting pellets. The mold temperature and resin temperature during molding were respectively 270°C and 70°C.

Two of the resulting molded pieces were friction-welded using a vibration welder (manufactured by Branson Corp.) at an amplitude of 1.0 mm, an applied pressure of 40 kg/cm², a welding depth of 1 mm, and a vibration frequency of 240 Hz, thereby forming a spherical hollow body. Next, pressure was applied, at room temperature, to the interior of the spherical welded article. The spherical article was examined at this time for pressure leaks, and the pressure at which the article burst was measured. This pleasure was treated as the bursting strength.

The measured results are all shown in Table 1.

The following components appear in the table.
6^{(a)}: A polyamide 6 having a relative viscosity, as measured in 90% formic acid, of 49.5
66/6: A polyamide 66/6 copolymer in which the molar ratio of the polyamide 66 units to the polyamide 6 units is 85:15 and which has a relative viscosity, as measured in 90% formic acid, of 48.0
6/66/610: A polyamide 6/66/610 terpolymer in which the molar ratio of the polyamide 6 units to the polyamide 66 units is 55:45, the molar ratio of the polyamide 6 units and polyamide 66 units combined to the polyamide 610 units is 77:23, and which has a relative viscosity, as measured in 90% formic acid, of 85
66: A polyamide 66 having a relative viscosity, as measured in 90% formic acid, of 49.5
Glass fibers: Chopped strand having a diameter of 10 µm and a length of 3 mm manufactured by Nippon Sheet Glass Co., Ltd.
Plasticizer: A 2-ethylhexoate polyethylene glycol having a molecular weight of 400

**Table 1**

| | Ex. 1 | Ex. 2 | Ex. 3 | Ex. 4 | Ex. 5 | Comp. Ex. 1 | Comp. Ex. 2 | Com. Ex. 3 |
|---|---|---|---|---|---|---|---|---|
| 6^{(a)}(pbw) | 75 | 75 | 75 | 95 | 95 | 15 | 50 | 0 |
| 66/6 (pbw) | 25 | 0 | 0 | 0 | 0 | 0 | 0 | 100 |
| 6/66/610 (pbw) | 0 | 25 | 25 | 5 | 5 | 0 | 0 | 0 |
| 66 (pbw) | 0 | 0 | 0 | 0 | 0 | 85 | 50 | 0 |
| Total polyamide component in composition (wt %) | 70.0 | 70.0 | 68.5 | 70.0 | 68.5 | 70.0 | 67.0 | 67.0 |
| Glass fibers (wt %) | 30.0 | 30.0 | 30.0 | 30.0 | 30.0 | 30.0 | 33.0 | 33.0 |
| Plasticizer(wt %) | 0 | 0 | 1.5 | 0 | 1.5 | 0 | 0 | 0 |
| Bursting strength (kg/cm²) | 13.0 | 14.6 | 15.2 | 13.6 | 13.7 | 10.2 | 11.4 | 11.9 |
| Relative viscosity | - | - | - | - | - | 48 | 48 | 48 |
| Flow length (cm) | 21.5 | 20.5 | 21.9 | 20.6 | 20.9 | - | - | - |
| Notes: the content of each polyamide component is by weight based on the total weight of polyamide component(s). | | | | | | | | |

It is apparent, from a comparison of Example 1 with Comparative Examples 1 and 2, that molded articles obtained from compositions containing a mixture of polyamide 6 and polyamide 6/66 copolymer had a higher bursting strength than molded articles obtained from compositions containing a mixture of polyamide 6 and polyamide 66. It is also apparent, upon comparing Example 1 with Comparative Example 3, that molded articles obtained from compositions containing a mixture of polyamide 6 and polyamide 66/6 copolymer had a higher bursting strength than molded articles obtained from compositions containing polyamide 66/6 copolymer.

A comparison of Example 2 with Example 4 shows that increasing the content of the polyamide 6/66/610 terpolymer increases the bursting strength even further.

Comparisons of Example 2 with Example 3 and of Example 4 with Example 5 demonstrate that the addition of a small amount of plasticizer enhances the flow properties of the resulting composition and also improves the bursting strength of molded articles obtained therefrom.

A comparison of Comparative Examples 4 and 5 shows that lowering the relative viscosity greatly compromises the bursting strength.

Moreover, a comparison of the flow length data from Examples 1, 2 and 4 with the flow length data from Comparative Example 4 shows that the compositions obtained in Examples 1, 2 and 4 all had good resin flows.

As can be appreciated from the above example, the present invention is able to provide polyamide compositions which have a good resin flow and are suitable for the fabrication of friction-welded molded articles. Moreover, hollow molded articles such as air intake manifolds that have been fabricated from compositions such as these using a friction-welding technique have an excellent bursting strength.

## Claims

1. A polyamide composition for friction-weldable molded articles comprising:
(A) 100 parts by weight of a polyamide mixture of (a) polyamide 6 and (b) an aliphatic polyamide copolymer and/or an aliphatic polyamide terpolymer, wherein the weight ratio of (a) to (b) is from 95:5 to 50:50; and
(B) 10 to 100 parts by weight of an inorganic reinforcement, based on the weight of the polyamide mixture.

2. The polyamide composition according to claim 1 additionally comprising:
(C) 0.1 to 6 parts by weight of a plasticizer, based on 100 parts by weight of the total amount of the polyamide mixture and the inorganic reinforcement.

3. The polyamide composition of Claim 1 or Claim 2 wherein in (b) at least one polymer is selected from the group consisting of polyamide 66/6 copolymers, polyamide 6/66/610 terpolymers, and polyamide 6/66/612 terpolymers.

4. A polyamide molded article comprising at least two friction-weldable molded members comprising a polyamide composition according to any of Claims 1 to 3.

## Patentansprüche

1. Polyamid-Zusammensetzung für reibungsschweißbare Formkörper, wobei die Zusammensetzung aufweist:
(A) 100 Gewichtsteile eines Polyamidgemischs aus (a) Polyamid 6 und (b) einem aliphatischen Polyamidcopolymer und/oder einem aliphatischen Polyamidterpolymer, wobei das Gewichtsverhältnis von (a) zu (b) gleich 95:5 bis 50:50 ist; und
(B) 10 bis 100 Gewichtsteile eines anorganischen Verstärkungsmittels, bezogen auf das Gewicht des Polyamidgemischs.

2. Polyamid-Zusammensetzung nach Anspruch 1, die zusätzlich aufweist:
(C) 0,1 bis 6 Gewichtsteile eines Weichmachers, bezogen auf 100 Gewichtsteile der Gesamtmenge des Polyamidgemischs und des anorganischen Verstärkungsmittels.

3. Polyamid-Zusammensetzung nach Anspruch 1 oder Anspruch 2, wobei in (b) mindestens ein Polymer aus der Gruppe ausgewählt ist, die aus Polyamid 66/6-Copolymeren, Polyamid 6/66/610-Terpolymeren und Polyamid 6/66/612-Terpolymeren besteht.

4. Polyamid-Formkörper mit mindestens zwei reibungsschweißbaren Formteilen, die eine Polyamid-Zusammensetzung nach einem der Ansprüche 1 bis 3 aufweisen.

## Revendications

1. Composition de polyamide pour des articles moulés, soudables par friction, comprenant:
(A) 100 parts en poids d'un mélange de polyamides (a) d'un polyamide 6 et (b) d'un copolymère aliphatique de polyamide et/ou d'un terpolymère aliphatique de polyamide, dans laquelle le rapport pondéral de (a) à (b) va de 95:5 à 50:50; et
(B) de 10 à 100 parts en poids d'un renforcement inorganique, basé sur le poids du mélange de polyamide.

2. Composition de polyamide selon la revendication 1, comprenant en outre:
(C) de 0,1 à 6 parts en poids d'un plastifiant, basé sur 100 parts en poids de la quantité totale du mélange de polyamide et du renforcement inorganique.

3. Composition de polyamide selon la revendication 1 ou la revendication 2, dans laquelle, dans (b), au moins un polymère est sélectionné parmi le groupe constitué de copolymères de polyamide 66/6, de terpolymères de polyamide 6/66/610 et de terpolymères de polyamide 6/66/612.

4. Article moulé en polyamide comprenant au moins deux membres moulés, soudables par friction, comprenant une composition de polyamides selon l'une quelconque des revendications 1 à 3.
